# EUROPEAN PATENT APPLICATION

(11) **EP 0 864 449 A2**
(43) Date of publication of application: **16.09.1998**
(21) Application number: 98660015.3
(22) Date of filing: 05.03.1998
(51) Int. Cl.: B60C 11/16

(54) **Non-slip lamella for vehicle tyre**

(30) Priority: 07.03.1997 FI 970975
(71) Applicant: Nokian Renkaat Oy, 37101 Nokia (FI)
(72) Inventor: Eromäki, Pentti Juhani, 37120 Nokia (FI)
(74) Representative: Laako, Tero Jussi

(57) **Abstract**

The invention relates to non-slip elements to be mounted in recesses (12) preformed in vehicle-tyre tread pattern segments (11), of which the tread has a plurality both successively in the rolling direction and in the direction transverse thereto, each non-slip element always being within one tread pattern segment. The non-slip element is composed of a strong and hard material and it has a stem portion (2) towards the tread (20) of the tyre and a flange-like basal portion (3) towards the body (21) of the tyre. In shape the non-slip element (1) is substantially lamelliform, and in the orientation of the tread the total thickness (D1) of its stem portion is at maximum approximately one-third of the width (L) of the stem portion, and in the orientation of the said width the basal portion (3) is substantially straight.

## Description

The invention relates to a passive non-slip element to be mounted in recesses preformed in vehicle-tyre tread pattern segments, of which the tread has a plurality both successively in the rolling direction and in the direction transverse thereto, the non-slip element being made up of a strong and hard material and its shape comprising a stem portion towards the tread of the tyre and a flange-like basal portion towards the body of the tyre, the non-slip element always being within one tread pattern segment. Furthermore, the invention relates to a vehicle tyre equipped with such non-slip elements.

Non-slip elements of this type, often referred to as non-slip studs, have long been used in various modifications. Typically a non-slip stud is made up of a round pin of a hard metal, placed in a round body, having a large-diameter stem portion towards the tread of the tyre and a flange-like basal portion towards the body of the tyre. These non-slip elements are pressed into recesses which are preformed in the tyre tread. They are known to have the disadvantages of a relatively large weight and a tendency of the stud projection measured outwards from the plane of the tyre tread to increase during use, thus causing studs to become detached during the wear of the tyre. The high stud weight and the large stud projection cause wear of the road surface and tyre noise. The tendency of the studs to become detached is also increased by the tilting of the stud, made possible by this known structure. Efforts have been made to reduce this tendency of the studs to become detached by using a stud design described in publication DE-28 04 939, in which the stud is V-shaped in cross-sectional planes parallel to the tread and which has, over the stud length, dovetail-like projections pointing outwards from the inside of the tyre, but no actual basal flange. This design very effectively prevents the tilting of the stud and possibly thus, together with the dovetail projections, reduces the tendency of the studs to become detached. However, since studs of the type described have in the orientation of the tread the thickness of conventional studs but are considerably longer than these, the weight of the studs described in the said publication is substantially still greater than that of conventional round studs. This results in high tyre noise, extensive wear of the road surface, and the subjection of the tyre to high stresses which may damage it.

Publication DE-1 053 957 describes small-sized and straight non-slip studs which are vulcanized to the tyre rubber. An additional characteristic is that the rubber material of the tyre contains fibres as a filler. In this manner it is possible to produce non-slip studs moderately light in weight, but experience has shown that during use, i.e. during driving. the vulcanization between the stud and the rubber becomes detached, and thus the non-slip studs of this type will not remain attached to the tyre.

The non-slip studs described above work in the conventional manner that the grip of the stud is produced by the penetration of the hard-metal part of the stud into the road surface under the effect of the projection of the stud tip from the plane of the tyre tread. In this case the grip of the stud is thus based on the penetration force of the stud in the orientation of the tyre radius. Publications FI-89688, WO-96/28310 and EP-0 204 030 describe non-slip elements based on another operating principle. In all of these publications, the non-slip elements are positioned so that their projection from the plane of the tyre tread is zero or very small, in which case, when the tyre is rolling at a constant speed, there is either no contact or only very slight contact between the non-slip element and the road surface. When the car is braked or accelerated, the deformation of the tyre rubber causes the non-slip elements to tilt, whereupon some edge of their veIy large end face oriented outwardly from the tyre impinges on the road surface owing to the slight projection increase caused. In all of these publications, an effort has been made to make this projection increase great by making the stud end face, which is approximately in the plane of the tread, very large in the orientation of the tread. For this reason, especially the stud according to publication FI-89688 is considerably heavier than a conventional non-slip stud, as is admitted even in the publication itself. In the same inventor's later publication WO-96/28310, an effort has been made to reduce this extra weight by giving the stem part of the non-slip element the shape of a hollow cone. In spite of this, the weight of the non-slip element according to publication WO-96/28310 is approximately double the maximum weight currently permitted by the regulations in Finland. Furthermore, experiments have shown that the projection, from the tyre tread, of the studs according to these two publications increases considerably rapidly during use, causing rapid detaching of the non-slip elements. In the main, the above also applies to the non-slip element according to publication EP-0 204 030. The only difference in the non-slip element according to this latter publication is the slightly flattened shape of the cross-section. This, again, causes additional problems, since the studs must be mounted in specific positions in recesses in the tyre tread, making the mounting considerably slower and more expensive.

It is an object of the present invention to provide a non-slip element having a weight considerably smaller than the maximum weight permitted by the regulations. A second object of the invention is a non-slip element of this type which would remain as well as possible attached to the tyre tread also when the tyre wears during use. A third object of the invention is to provide a non-slip element providing both good longitudinal grip and good transverse grip of the tyre and at the same time causing as little wear of the road surface and as little tyre noise as possible during driving. A fourth object of the invention is a non-slip element of this type the manufacturing costs of which can be made low and which would be simple to mount in recesses preformed in the tread pattern segments of the tyre.

The problems described above can be solved and the objects defined above can be achieved by a non-slip element according to the invention, which is characterized in what is defined in the characterizing clause of Claim 1 and by a vehicle tyre according to the invention, equipped with non-slip elements, the tyre being characterized in what is defined in the characterizing clause of Claim 9.

The most essential advantage of the invention is that the mass of the non-slip element according to it is considerably less than the maximum weights currently permitted for studs. At its best, the non-slip element according to the invention has a weight only approximately one-half of the maximum weight permitted by current official regulations, or possibly only 1/3 - 1/5 of the weight of the studs according to the reference publications described above. Another advantage of the invention is that the end face of the non-slip element according to it remains, even during the wearing of the tyre, close to its original position, i.e. close to the tread plane, in which case the non-slip element remains well attached to the tyre, and a continuously small rolling resistance and low tyre noise are obtained for the tyre. The wear of the road surface will also remain very slight. A third advantage of the invention is that, when a non-slip element according to it is used, the longitudinal grip and transverse grip of the tyre can be proportioned in a desired manner, and the grip of the tyre will be good in different situations and on different driving surfaces.

The invention is described below in greater detail, with reference to the accompanying drawings.

Figures 1A and 1B depict the first embodiment of the non-slip element according to the invention, from direction I and respectively II in the figures.

Figures 2A and 2B depict a second embodiment of the non-slip element according to the invention, from direction III and respectively IV in the figures.

Figures 3A and 3B depict a third embodiment of the non-slip element according to the invention, from direction V and respectively VI in the figures.

Figures 4A and 4B depict a fourth embodiment of the non-slip element according to the invention, from direction VII and respectively VIII in the figures.

Figures 5A and 5B depict a fifth embodiment of the non-slip element according to the invention, from direction IX and respectively X in the figures.

Figures 6A and 6B depict a sixth embodiment of the non-slip element according to the invention, from direction XI and respectively XII in the figures.

Figures 7A and 7B depict a seventh embodiment of the non-slip element according to the invention, from direction XIII and respectively XIV in the figures.

Figures 8A, 8B and 8C depict an eighth embodiment of the non-slip element according to the invention, from direction XV, in section XVI-XVI and respectively from direction XVII in the figures.

Figure 9 depicts axonometrically the positioning of a non-slip element according to the invention in a tread pattern segment of a vehicle tyre.

Figures 10A and 10B depict the positioning in the resting state of a non-slip element according to the invention and its operation, for example, during braking and respectively during acceleration, in a section through XVIII-XVIII in Figure 9.

Figure 11 depicts one positioning of non-slip elements according to the invention in the pattern segments of a tyre, as seen in a direction perpendicular to the tread.

Figure 12 depicts another positioning of non-slip elements according to the invention in the pattern segments of a tyre, as seen in a direction perpendicular to the tread.

Figure 13 depicts an overall picture of a vehicle tyre tread with non-slip elements according to the invention positioned in different ways in different pattern segments.

Figure 14A depicts a third positioning of non-slip elements according to the invention in the pattern segments of a tyre, as seen in a direction perpendicular to the tread, from direction XI in Figure 14B.

Figure 14B depicts the positioning of non-slip elements according to the invention in the resting state and their operation, for example, during braking and respectively during acceleration, in a section through IX-IX in Figure 14A.

Figure 15A depicts a fourth positioning of non-slip elements according to the invention, seen in a direction perpendicular to the tread, from direction XII in Figure 15B.

Figure 15B depicts the positioning of non-slip elements according to the invention in the resting state and their operation, for example, during braking and respectively during acceleration, in a section through X-X in Figure 15A.

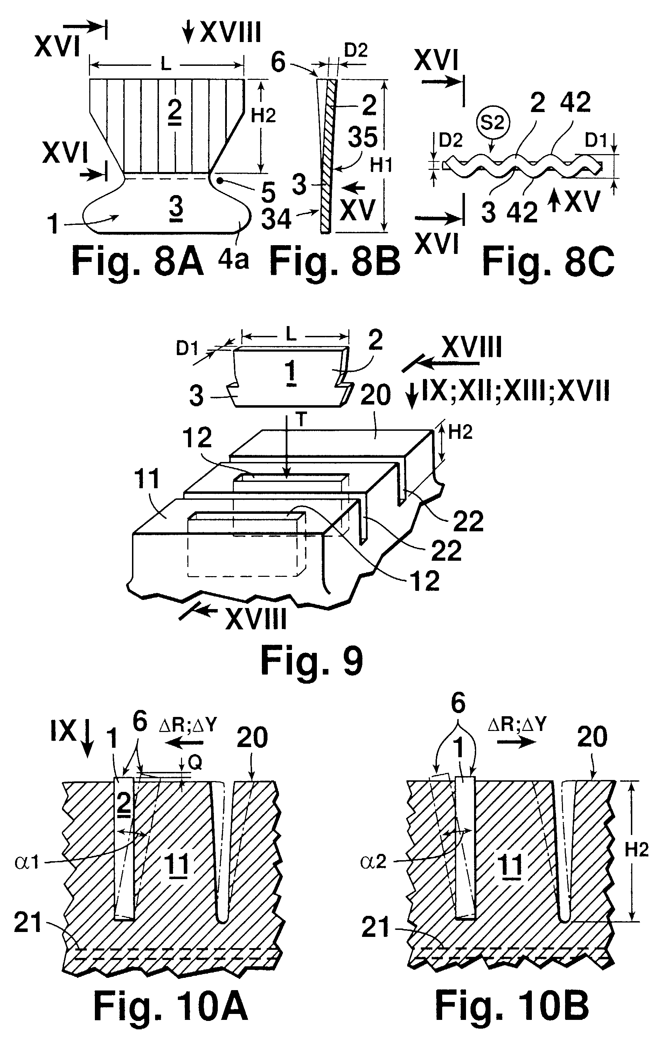

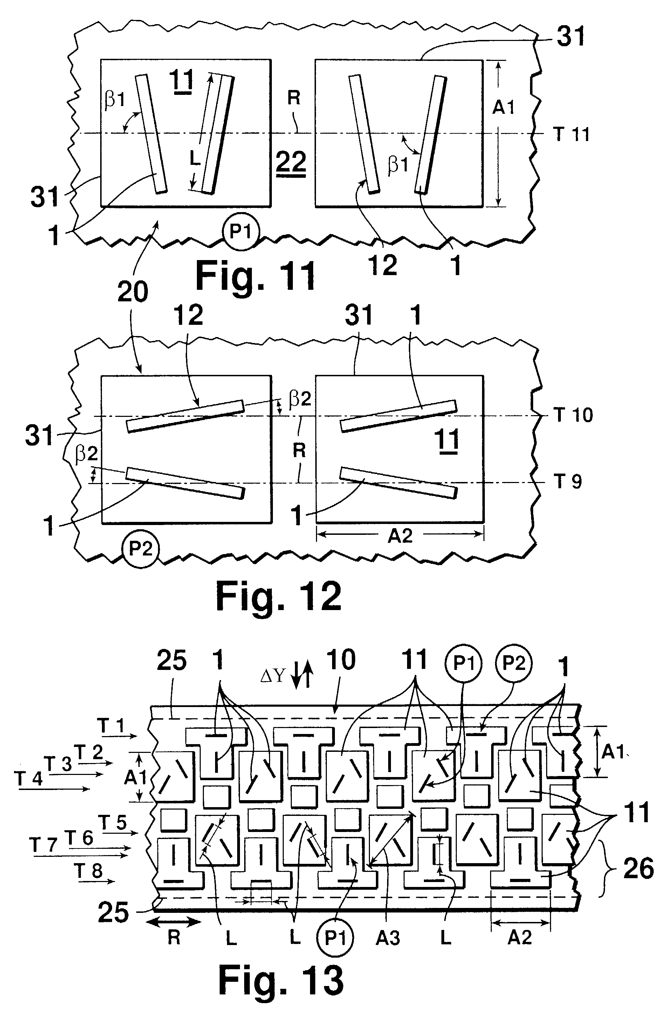

Figure 9 shows tread pattern segments 11 of a tyre 10; in at least some of the segments there are recesses 12, produced in connection with the tyre manufacture, i.e. preformed recesses, into which passive non-slip elements 1 are pushed after the manufacture of the tyre 10, before the tyre is taken into use, in a direction T perpendicular to the tread 20. In this context, by the passivity of the non-slip elements is meant that, when in a tyre, they are not moved mechanically, for example pneumatically, by means of a separate power source, between different modes of use, and the non-slip elements 1 do not have parts movable one relative to another; instead, the operation of the non-slip elements takes place as an interaction among the rubber layer or composite rubber layer of the tyre, the non-slip element itself, and the road surface when there is a change in speed or a change in direction of the tyre relative to the road surface. In this sense of interaction, the non-slip element according to the invention and a vehicle tyre equipped with such non-slip elements operate dynamically as the position of a non-slip element 1 changes expediently in different driving situations under the effect of a change in speed and/or a change in direction, as is described in greater detail below. The mere centrifugal force of the tyre rotation does not have at least primary or substantial significance in terms of the dynamic operation of the non-slip element according to the invention. The non-slip elements 1 are made of a strong and hard material, and the shape of the non-slip elements comprises one stem portion 2 towards the tread 20 of the tyre and one flange-like basal portion 3 towards the tyre body 21. The recesses 12 preformed in the tread pattern segments 11 correspond in their cross-sectional shape approximately to the cross-sectional shape of the non-slip elements in the orientation perpendicular to the non-slip element length H1 formed by one stem portion and one basal portion in succession. Thus, in this case the preformed recesses 12 are narrow and long in the orientation of the tread 20, as can be seen in Figure 9. The same substantially oblong shape of the preformed recesses 12, as well as of the studs, can also be seen in Figures 11 and 12. The total length H1 of the non-slip element according to the invention is, in the conventional manner, at maximum equal to the height H2 of the tyre tread pattern segment as measured from the bottom of the tyre grooves 22. The non-slip element 1 according to the invention thus has no contact with the tyre body 21 but is in its entirety situated within the tread pattern segment 11.

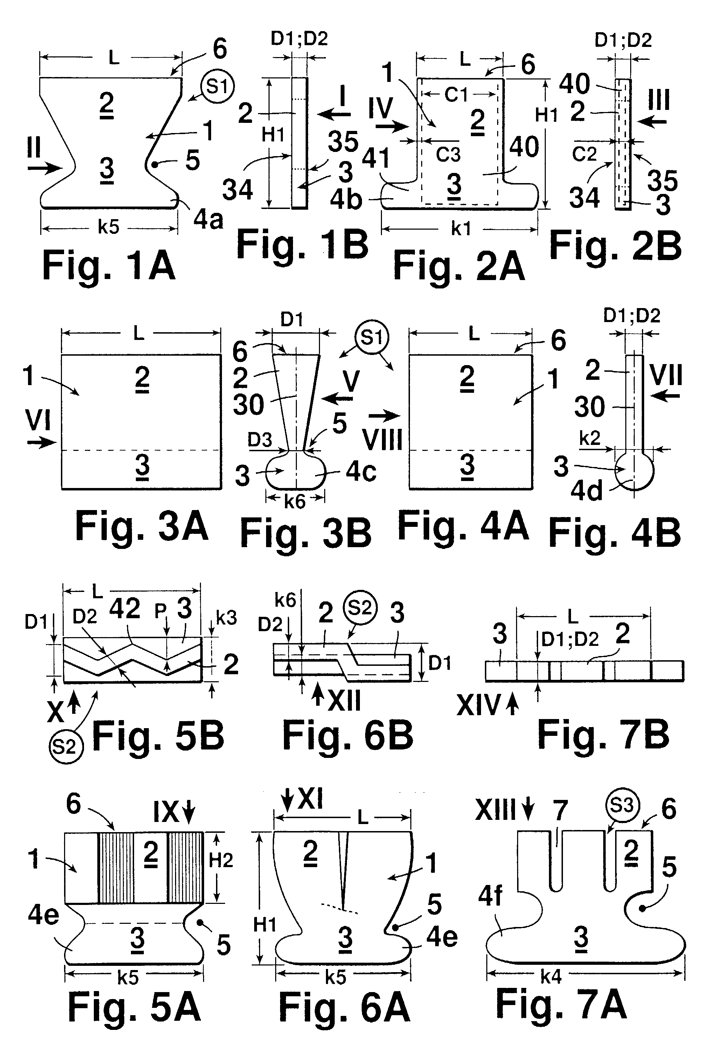

Figures 1A-8C show in greater detail various embodiments of the shape according to the invention of the non-slip element 1 according to the invention. According to the invention, the non-slip element is in shape substantially lamelliform, and at least the total thickness D1 of the stem portion 2 of the non-slip element is, in the orientation of the tread 20, at maximum approximately one-third of the width L of the stem portion 2 in the orientation of the tread. Thus, when seen in a direction IX, XI, XIII and XVII perpendicular to the tread 20, the non-slip elements according to the invention seem clearly oblong, as can be seen directly in Figures 5B, 6B, 7B and 8C and in Figure 9. The same can be understood from Figures 11, 12 and 13, which thus depict a vehicle tyre tread 10 from the outside, in a direction perpendicular thereto. By the total thickness D1 and the width L of the stem portion is meant here the largest outer dimensions of the stem portion of the non-slip element or the area delimited by the outermost points in a direction perpendicular to the length H1 formed by the stem portion and the basal portion of the non-slip element. In addition, the basal portion 3 of the non-slip element according to the invention is in the main straight in the orientation of the above-mentioned width L. This can be understood, for example, with the help of Figures 5A-5B, 6A-6B and 8A-8C, in which the stem portion 2 is not straight in the orientation of the width L but the basal portion 3 is straight and not corrugated or jagged in the manner of the stem portion. More precisely, by this straightness is meant that the basal portion 3 is straight relative to its centre line parallel to the width L, or at least symmetrical relative to the central plane 30 parallel to the length H1 of the non-slip element. Thus the basal portion 3 may be, over the extent of the width L, for example, thicker in the middle and thinner at the ends or, vice versa, thinner in the middle and thicker at the ends, or its thickness may vary in the direction perpendicular to the width L in some other manner, expedient in the given case. For example, in the case of Figures 3A-3B and 4A-4B, the basal portion 3 can be designed in this manner, oval or hourglass-shaped or in some other shape in the direction of the width L, as long as it is approximately symmetrical relative to the centre plane 30 parallel to the length H1 of the non-slip element. In the direction of the length H1, however, the basal portions may be asymmetrical, as can be seen, for example, in Figure 1A. In any case, even if the basal portion 3 were slightly curved or tortuous over the width L dimension, this curvature or tortuosity should in any case be substantially less than the deviation of the curves of the stem portion from the straight line or plane over the width L dimension. In addition, the basal portion 3 of the non-slip element according to the invention is designed moderately thin, especially in the orientation of the non-slip element thickness D1, D2 perpendicular to the width L. For this purpose, the thickness of the basal portion in the orientation of the tread 20 is in certain embodiments, which are shown in Figures 1A-2B and 7A-8B, substantially equal to the material thickness D2 of the stem portion 2. In another embodiment, shown in Figures 6A-6B, the thickness K6 of the basal portion has been designed greater than the material thickness D2 of the stem portion, but smaller than the total thickness D1 of the stem portion. In certain other embodiments, shown in Figures 3A-5B, the thickness K2, K3, K6 of the basal portion in the orientation of the tread 20 is greater than the total thickness D1 of the stem portion. However, the thickness K2, K3, K6 of the basal portion in the orientation of the tread 20 is in any case smaller than five times the total thickness D1 of the stem portion. Typically this thickness is at maximum four-fold, and preferably at maximum three-fold, as compared with the total thickness of the stem portion. In many cases the usable basal portion thickness K2, K3, K6 is, for example, 120%, 130% or 220% of the total thickness of the stem portion, as shown in Figures 3A-5B. The purpose is to give the basal portion a shape which permits the tilting of the non-slip element without damaging and wearing the tyre rubber but which prevents the non-slip element from becoming detached. In order to ensure tilting and to reduce the wear of the recesses for non-slip elements in the tyre, at least those embodiments of the non-slip element in which the basal portion thickness K2, K3, K6 is greater than the total thickness D1 of the stem portion, and in which the basal portion thus constitutes a flange 4c, 4d transverse to the width L of the non-slip element, the edges of this flange are rounded. In general it is advisable to make the rounding greater the greater the flange thickness K2, K3, K6. The great rounding evident in Figures 3B and 4B, its radius corresponding to approximately one-half of the vertical dimension of the flange in the orientation of the height H1 of the non-slip element, is one preferred embodiment. It is clear that the radius of the rounding may also be smaller, for example 30% or 20% of the said vertical dimension of the flange, especially in the embodiment of Figure 3B, but also in the embodiment of Figure 4B. If the flange thickness is clearly greater than in these figures, for example of the order of the maximum dimensions mentioned above, it is in general preferable to use higher values for the radius of the rounding, 30% and 50% of the said vertical dimension.

However, the great width L of the non-slip element 1 according to the invention, described above, is substantially smaller than the width A1 of the tread pattern segment 1 in which it is mounted in the tyre, in a direction perpendicular to the rolling direction R of the tyre, when the non-slip element is placed at least in the main in an onentation transverse to, or at only a small angle β1 to, this rolling direction, as is shown in Figures 11 and 13. Respectively, the above-mentioned great width L of the non-slip element 1 is substantially smaller than the width A2 of the tread pattern segment in which it is mounted, in the tyre rolling direction R, when the non-slip elements have been positioned to be approximately parallel to the rolling direction R or at only a small angle β2 relative to it, as shown in Figures 12 and 13. In can be stated in general that this width L of the non-slip element is always smaller than the width A3 of the tread pattern segment in the orientation in which the width L of the non-slip element mainly settles, as is indicated in Figure 13. In other words, the non-slip element according to the invention is always within one tread pattern segment 11 and does not extend to its vertical edges 31 which form the sides of the grooves 22 separating the tread pattern segments.

As was stated above, the stem portion 2 of the non-slip element according to the invention may be straight S1 over the dimension of its width L, as shown in Figures 1A-4B, 7A-7B and 9. Alternatively, the stem portion 2 may also be corrugated or jagged S2 over the dimension of its width. L, as shown in Figures 5A-6B and 8A-8C. This corrugation S2 may be wave-like, i.e. rounded, as can be seen in Figure 8C, but it may also be more angular in a jagged manner, as can be seen in Figures 5B and 6B. The extent, i.e. depth P, of the corrugation or jaggedness may be substantially constant over the entire height H2 of the stem portion 2; such a case is shown in Figures 5A-5B. Alternatively, the corrugation or jaggedness may decrease gradually from the end face 6 towards the lower edge of the height H2 of the stem portion, as is shown in Figures 6A-6B and 8A-8B. The number of waves or teeth in the stem portion of a non-slip element according to the invention may be two or more. Thus, Figure 6B shows a situation in which there are two teeth, Figure 5B shows a situation with three angular corrugations, and Figures 8A-8C a case with eight curved corrugations. The use of corrugations or teeth increases the rigidity, strength and thereby also the functioning of a non-slip element 1 according to the invention, made of a thin material with thickness D2. The braking grip, acceleration grip and lateral grip also increase in this case. Furthermore, the stem portion may be equipped with notches or grooves 7 extending from the end face 6 towards the basal portion 3, in which case the stem portion is divided S3 into several sections. These sections may be in the same plane parallel to the stem portion width L, as shown in Figure 7B, or they may be otherwise jagged as shown in Figures 5B and 6B except that between the jagged sections there are the above-mentioned notches 7. The cross-section of the non-slip element 1 according to the invention in the orientation transverse to its length may also be a flat oval, a flat hourglass or a shape resembling these, thus, generally some lamelliform shape.

The total thickness D1 of the stem portion 2 of the non-slip element I is, as already pointed out above, at maximum one-third of the width L of the stem portion; preferably this total thickness is within the range of 1/4 - 1/20 of the stem portion width L discussed above, and typically of the order of 1/5 - 1/15 of the stem portion width L. The embodiments depicted in the figures show ratios D1/L which are approximately 1/3.8 in Figures 5A-6B, 1/6.5 in Figures 8A-8C, 1/3 in Figures 3A-3B, 1/8 in Figures 2A-2B and 4A-4B, and 1/9 in Figures 1A-1B and 7A-7B. It is clear that the total thickness D1 may be made thinner in proportion to the stem portion width L than shown in the figures, because in the figures it has been necessary to take into account the clarity of the presentation. In particular, when a relatively high ratio D1/L is used, as in Figures 5A-6B and Figures 8A-8C, it is in general most advantageous to use in the non-slip element a material the material thickness D2 of which is smaller than the total thickness D1. it must be understood that, for example, in the embodiments according to the figures, any of the shapes shown can be implemented with dimensions deviating from those in the figures.

In order to keep the non-slip element 1 according to the invention in place and to prevent it from becoming detached from its recess 12 in the thread pattern segment 11, the non-slip element has in the basal portion 3 flanges 4a...4f of a kind. Figures 1A-2B show flanges 4a and 4b, Figures 7A-8C show flanges 4a, 4b and 4f, which project from the stem portion 2 or the neck portion 5 of the non-slip element only in the orientation of its width L. In these cases the thickness of the flange 4a, 4b and 4f of the basal portion is thus the same as the thickness D2 of the material of the non-slip element. Figures 3A-4B depict an embodiment according to the invention wherein the basal portion flanges 4c and 4d project from the stem portion 2 only in the orientation of the total thickness D1 of the non-slip element. In these cases the flange 4c, 4d of the basal portion does not project at all from the stem portion in the orientation of its length but only in the orientation perpendicular thereto, in which case the flange thickness is greater than the thickness D2 or minimum thickness D3 of the stern portion material. Figures 5A-5B and 6A-6B show cases in which the flange 4e of the basal portion 3 projects from the stem portion 2 in the orientations of both the width L of the non-slip element and its total thickness D1. In Figures 5A-5B the thickness of the flange 4e is greater than the thickness D2 of the stern portion material and greater than the total thickness D1 of the stem portion, whereas in Figures 6A-6B the thickness of the flange 4e is greater than the thickness D2 of the stem portion material and smaller than the total thickness D1 of the stem portion.

The flanges 4b, 4d, 4e and 4f of the non-slip element are designed so that the maximum dimension K1, K2, K3, K6 of the flange is greater than the maximum width L of the stem portion or the maximum thickness D1 of the stem portion or the thickness D2 of the stem portion material. These embodiments are shown in Figures 2A-2B, 4A-4B and 5A-7B. Alternatively, the non-slip element may have a neck portion 5 between the flange 4a, 4c, 4e and 4f and the stem portion 2, in which case the extent K5 of the flange at least in the said orientation, i.e. the onentation of the width L of the non-slip element, may be approximately equal to the width L or the total thickness D1 of the stem portion. These embodiments are shown in Figures 1A-1B, 3A-3B and 5A-6B. Both of these designs can be combined, as has been done in the embodiment according to Figures 7A-7B, in which the flange 4f both is greater in its extent K4 than the width L of the stem portion and is additionally separated by a neck portion 5 from the stem portion 2.

The width L of the stem portion 2 of the non-slip element, according to the invention, of the shape described above is within the range of 3 mm - 20 mm and its total thickness D1 is within the range of 0.5 mm - 3 mm. The material thickness D2 of the stem portion 2, or possibly also of the basal portion 3, of the non-slip element according to the invention is of the same order, 0.5 mm - 3 mm. The length H1 of the non-slip element 1 is within the range of 5 mm - 15 mm. The ratio of the total thickness D1 of the stem portion of the non-slip element to the total length H1 of the non-slip element, i.e. D1:H1, is at maximum 0.4 and preferably at maximum 0.25, and typically smaller than 0.2. Furthermore, the width of the basal portion flange 4a may be 95% - 110% of the stem portion width L, i.e. approximately equal to the stem portion width, as in Figures 1A and 8A, or 150% - 180% of the stem portion width L, as the width of the flange 4f and 4b in Figures 7A and 2A. The thickness of the basal portion flange, in turn, may be 40% - 50% of the total thickness D1 of the stem portion, as in Figures 6B and 8B; or 100% of the total thickness D1 of the stem portion, i.e. approximately equal to the total thickness of the stem portion, as in Figures 1B, 2B and 7B; or 120% - 220%, as in Figures 3B, 5B and 4B. As can be seen from the above values, the width L of the stem portion 2 of the non-slip element according to the invention is of the same order as the diameter or dimension of the conventional prior-known studs. Since the total thickness D1 of the stem portion of the non-slip element according to the invention is, in the manner described above, at maximum one third of this width L, and since the length H1 of the non-slip element according to the invention is of the same order as the lengths of conventional studs, it can be understood directly that the weight of the stud according to the invention is considerably smaller than the weight of any conventional stud the cross-section of which in the orientation of the tyre tread is usually round, possibly approximately square, or at most slightly oval. Even if the width L of the stem portion of the non-slip element according to the invention were made clearly larger, for example, one and a half times or twice the diameter or dimension of prior known studs, owing to the small total thickness D1 of the stud according to the invention and its possibly even smaller material thickness D2, studs clearly lighter in weight than prior known stud structures would be arrived at. Thus it can be noted that, for a passenger car, the non-slip element according to the invention weighs at maximum approximately 1 g, and typically at maximum 0.8 g. Preferably the weight of a non-slip element for passenger cars is at maximum 0.7 g, but even a weight of 0.5 g is fully realistic. Quite correspondingly, for the tyres of a van, the non-slip element according to the invention weighs at maximum approximately 2 g and typically at maximum 1.6 g. Preferably the non-slip element according to the invention weighs at maximum 1.4 g, and in this case also a weight of 1 g can be achieved. For truck tyres, the non-slip element according to the invention weighs at maximum approximately 3 g and typically at maximum 2.5 g. Preferably the weight of such a non-slip element according to the invention is approximately 2. 1 g, and the achievable weight is of the order of 1.5 g. Thus the non-slip element according to the invention is in every situation at least 10-20% lighter in weight, and usually 20-40% lighter, than a prior known stud intended for the corresponding use. As can be noted from the above, it is also possible to achieve weights which are of the order of one-half of the weight of prior-known, currently used studs. It is clear that a non-slip element weight this low reduces tyre noise as well as road wear to a truly considerable degree.

The non-slip element 1 according to the invention, of the shape described above, can be manufactured from materials of a plurality of different types. First, the non-slip element can be prepared from one strong and hard material, which may be a metal alloy. In this case the principal component of the metal alloy is preferably some metal of the iron group. It may be alloyed with other metallic alloying elements or non-metal alloying elements in order to render the material sufficiently strong and hard for use in a non-slip element. The strength can be increased not only by alloying during the preparation of the metal alloy but also by suitable heat treatments, wherein it is also possible to use atmospheres or melt baths or powder environments or the like which cause additional alloying or the formation of additional phases either on the surface of the non-slip element or throughout the thickness of the material of the non-slip element. Under the effect of all of these, a sufficient quantity of phases which render it strong and hard are provided in the metal alloy.

Another option is to form the non-slip element from substantially one strong and hard material, which is a ceramic material. By such a ceramic material is meant, for example, a sintered, substantially homogeneous oxide, nitride, carbide, boride, silicide, a mixture or complex compounds thereof, and possibly silicate or silicates. By a ceramic material is thus meant a material in the main of an even quality, wherein all or at least most of the components are bonded to one another. It is, however, clear that since what is in question is a sintered material, it may contain some degree of porosity.

A third option is that the non-slip element according to the invention is made of a composite material which has a clearly identifiable reinforcing phase, i.e. particles of a reinforcing matenal. These particles are bound together by an at least partly separate matrix matenal. The boundary between the above-mentioned ceramic material and the composite material here discussed is known to be unclear or subject to various interpretations. However, the touchstone usually used is that from a composite material it is possible clearly to detect a reinforcing phase and a matrix material, whereas in a ceramic material these are either difficult or impossible to distinguish. In an extreme case it is perceivable that both a ceramic material and a composite material would have the same basic materials but, owing to differences in the manufacturing techniques, either a ceramic material or a composite material would be arrived at. Thus, conventional hard metals in which the reinforcing phase is often tungsten carbide or a mixture of tungsten carbide and titanium carbide and the matrix material is cobalt are here regarded as composite materials. In general, the matrix material of a composite matenal may be made up of any metal or plastic, i.e. polymer, suitable for the purpose, and the reinforcing phase of another metal or metal alloy or some oxide, nitride, carbide, boride, silicide, or a mixture or complex compounds thereof. The reinforcing phase may be in the form of particles of different shapes or they may be in the form of fibres. Some examples of such fibres are carbon fibre, boron fibre, kevlar fibre, etc. Of some materials, so-called whiskers can be used as the reinforcing phase. Of the said matrix matenals and reinforcing phase materials it is possible to form a large number of different combinations, from among which a combination suitable for the matenal of a non-slip element according to the invention can be found. In a composite material the reinforcing phase and the matrix material binding it are at least approximately evenly distributed into the element. If the reinforcing phase used is fibres or whiskers, it is expedient to arrange them in a non-slip element according to the invention in the orientation of its length H1.

A fourth option is to form the non-slip element according to the invention as a laminate, the layers of the laminate being preferably in the orientation of the lamella of the lamelliform non-slip element. In this case the matenal thickness D2 of the non-slip element 1 is thus made up of various layers perpendicular to the thickness. Most preferably layers of a hard material are provided on the surfaces 34 and 35 of the non-slip element, and a softer material which gives strength and toughness is provided in the middle or in the middle parts in the orientation of the thickness D2. This construction is not shown in detail in the figures. The non-slip element according to the invention can be formed in the manner of a laminate also so that a strong and hard lamelliform piece of material substantially of the size of the non-slip element or slightly smaller, of any suitable type described above, is cast within a plastic mantle or a metal mantle, which forms the final shape of the outer surface of the non-slip element. In such a case the ratio of the thickness C2 of the material piece 40 in the orientation of the total thickness D1 of the non-slip element to the width C1 in the orientation of the width L of the non-slip element must be as described above regarding the non-slip element, i.e. the width C1 is at maximum one-third of the thickness C2, etc. Figures 2A and 2B illustrate such an embodiment, this piece 40 mounted inside being indicated by a dotted line. As can be seen in Figures 2A-2B, by the mantle 41 there are provided only parts, such as flange 4b, which ensure that the non-slip element will remain attached to the tyre. The thickness C3 of the mantle 41 in the area of the stem portion 2 is on all its sides at maximum equal to the total thickness D1 of the stem portion, but usually at maximum one-half of it. In a case in which the stem portion 2 of the non-slip element is straight or almost straight, as in Figures 1A-2B, 4A-4B and 7A-7B, the thickness of the mantle 41 is, for example, at maximum equal to the material thickness D2 of the stem portion or at maximum one-half of this thickness D2. The thickness C2 of the mantle is, for example, at maximum 2 mm, and typically within the range of 1 mm - 0.5 mm. Here it must be taken into account that in the embodiments of Figures 5A-6B and 8A-8C it is possible to use a mantle which fills up the depressions between the teeth or corrugations, for example dimension P in Figure 5B. In this case the thickness of the mantle, of course, varies considerably, but its thickness in the area of the convex ridges 42 is, however, small, as is the above-mentioned portion of the material thickness D2, or even substantially smaller, down to zero thickness.

The non-slip elements 1 according to the invention can be positioned in the tread pattern segments 11 of a vehicle tyre 10 in many different ways, in which case the desired longitudinal grip properties, lateral grip properties and other driving properties and operation of the tyre can be obtained. These are illustrated in Figures 11-15B. In order to achieve sufficient grip during acceleration, and at least sufficient grip during braking, at least some proportion, i.e. usually a substantial proportion, of the non-slip elements according to the invention in the tyre 10 are in position P1, wherein their width L is transverse to the tyre rolling direction R. In the tread pattern shown schematically in Figures 13 and 14A-15B there are two non-slip element rows T2 and T7 and a third non-slip element row T12, in which the non-slip elements are perpendicular to the tyre rolling direction R. Figure 11 depicts a modification of this situation, the width L of the non-slip elements forming a substantial angle β1 to the rolling direction R. This angle β1 between the width L of the non-slip elements and the rolling direction R is at least within the range of 45°-90°, but is typically within the range of 70°-90°, as in Figures 11 and 13.

Furthermore, preferably in a tyre according to the invention also a certain proportion of the non-slip elements 1 in a tyre 10 are in position P2, in which their width L is substantially longitudinal in relation to the tyre rolling direction R. Such a situation is depicted in the tread patterns of Figure 13 in non-slip element rows T1 and T8, as well as in Figure 12 in non-slip element rows T9 and T10. In the case of Figure 13, the length L of the non-slip elements is parallel to the rolling direction R, whereas in the case of Figure 12 the width L of the non-slip elements forms a rather small acute angle β2 to the rolling direction R. The angle β2 between these non-slip elements in longitudinal positions P2 and the rolling direction is at least within the range of 45°-0°, but typically within the range of 20°-0°, as shown in Figures 13 and 12. In this context it is pointed out that both angle β1 and angle β2 are that angle between the non-slip element width L and the rolling direction R which is the smaller one of the angles formed by crossing, as indicated in the figures. This longitudinal position P2 defined above provides more lateral grip for the tyre, i.e. grip in directions transverse to the rolling direction R.

In a vehicle tyre the numbers of non-slip elements 1 and the positions of their widths L in relation to the tyre rolling direction R are always arranged so that a longitudinal grip and a lateral grip evenly distributed over the length of the circumference are provided in the tyre. In this case the non-slip elements are normally situated evenly distributed over the circumference. One possibility to produce the above-mentioned homogeneous grip is to arrange the non-slip elements in a plurality of rows in the rolling direction, i.e. in the direction of the circumference of the tyre, the rows being located adjacently in the direction perpendicular to the rolling direction R, either completely separate from one another or partly interlaced. Figures 11-15B show such rows T1-T12 of non-slip elements 1. Rows T1, T8 and T12 are non-interlaced relative to the other rows. Rows T2, T3 and T4, and respectively rows T5, T6 and T7, are mutually somewhat interlaced. Rows T9 and T10 are clearly separate from each other, but parallel in the manner defined relative to the rolling direction R. In each of the said rows T1-T12 either the non-slip elements are substantially in the same position relative to the rolling direction or the non-slip elements form the same angle β1 or β2 to the rolling direction. In each of the rows T1-T8, all of the non-slip elements 1 are in the manner defined above in the same position relative to the rolling direction, whereby there thus forms a row of non-slip elements in the same position on the circumference of the tyre 10. In the case of Figure 11, in row T11 the length L of the non-slip elements forms an angle β1 of the same magnitude to the rolling direction R, and in the case of Figure 12, in rows T9 and T10 the length L of the non-slip elements forms an angle β2 of the same magnitude to the rolling direction R. However, the different non-slip elements are in different positions, of which there may in this case be two different types, as can be seen in Figures 11 and 12. It is preferable that these two different positions, having the same angle β1, β2, alternate systematically over the entire length of the tyre circumference. Usually it is preferable to provide non-slip elements 1 in a longitudinal position P2 in the area of the tyre shoulder 25 or in the tread area 26 adjacent to it. The lateral grip can be thereby improved. Non-slip elements in a lateral position P1 can be placed not only in the area of the tyre shoulder 25 or the area 26 close to it, but also towards the middle of the tyre, whereby a good braking grip is achieved. Owing to its light weight and its small or non-existent penetrating force during normal, constant driving, the non-slip element according to the invention can be used in a location considerably closer to the centre line parallel to the rolling direction than can conventional studs. This further improves the grip of a tyre equipped with studs according to the invention.

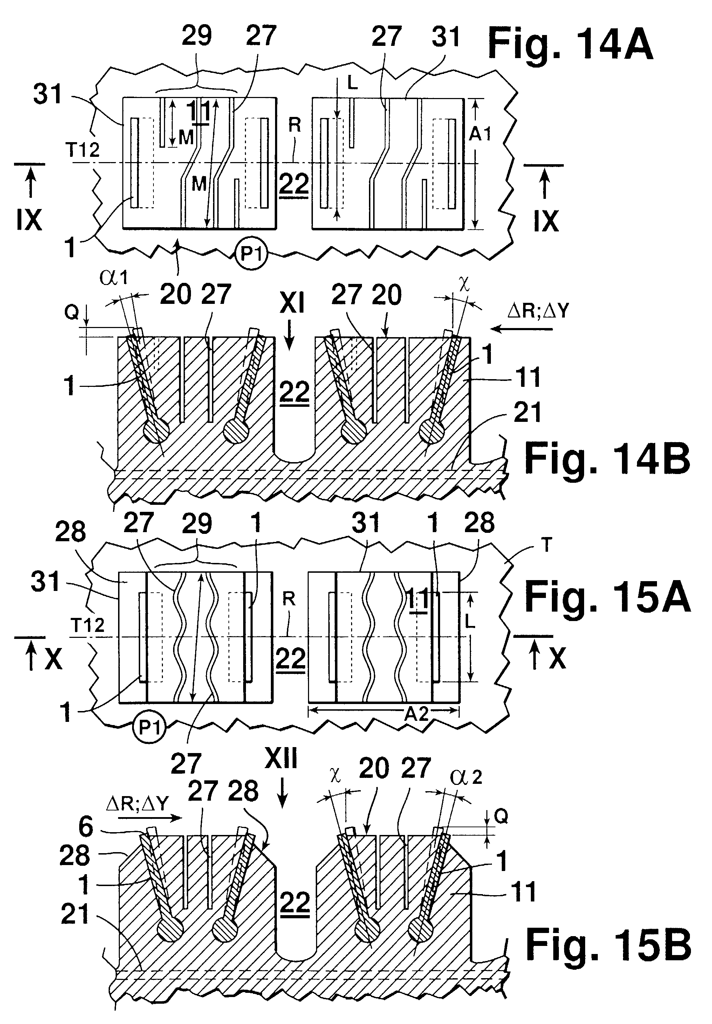

In the tread pattern segments the non-slip elements 1 can be placed vertically so that in the resting state, in which the tyre is stationary or rolling at constant speed, the length H1 of the non-slip elements is perpendicular to the plane of the tread 20. This position is shown in Figures 10A-10B, and in this case there may be one, two or more non-slip elements in a pattern segment and their site within the area delimited by the tread pattern segment dimensions A1-A3 may be any desired or planned site. On the other hand, in tread pattern segments 11 the non-slip elements 1 may be placed in a slanted position so that in the resting state the length H1 of the non-slip elements forms an angle χ to the normal to the plane of the tread 20 in a plane perpendicular to the width L. This position is depicted in Figures 14A-15B, and in this case there are typically two non-slip elements in a tread pattern segment 11, and these two non-slip elements are located within the area limited by the dimensions A1-A3 of the pattern segment, close to the opposite edges 31 of the pattern segment. In particular, the non-slip elements are in the resting state tilted at angle χ in such a manner that the basal portions 3 of the non-slip elements are closer to each other than the stem portions, and respectively the stem portions 2 and the end faces 6 are farther away from each other than the basal portions. If in this embodiment the non-slip elements are placed asymmetrically, the slant can be defined so that the stern portions 2 and the end faces 6 are farther away from the central parts 29 of area A1-A3 of the tread 20 of the pattern segment 11. This angle χ is according to the invention within the range of 3°-45° in magnitude, and preferably smaller than 30°. However, typically angle χ is greater than 5° or 10°. Thereby the projection increase Q of the non-slip element is made more effective, as described below. In addition, it is advantageous if the pattern segment 11 has, between the non-slip elements on the edge, i.e. in the central parts 29 of the tread 20 of the pattern segment, one or more narrow slits 27, known per se, which slits are substantially narrower than the grooves 22 between the pattern segments. The slits 27, which are also called lamellae, are so narrow that their edges, during the movement of the tyre, at least at times bear on each other, which is not done by the grooves 22. The length M of the slits is at least in part parallel to the width L of the non-slip elements or, alternatively, at least substantially parallel to the width L of the non-slip elements. In Figure 14A the central slits 27 are partly parallel, but in the main non-parallel, to the width L, whereas in Figure 15A the slits 27 are substantially parallel to the width L of the non-slip element. The slits 27 may extend over the entire pattern segment or over only part of its dimensions A1-A3. Possibly the pattern segment 11 may also have an edge bevel 28, which connects the vertical edge 31 and the tread 20. The edge bevel 28 may end approximately at that point of the tread 20 where the stem portion 2 of the non-slip element meets the tread and where thus the end face 6 is situated.

The operation of a non-slip element 1 according to the invention is described below with the help of Figures 9 and 10A-10B and 14B and 15 B. The positions of the pattern segment and the non-slip element in the resting state, i.e. when the vehicle tyre either remains stationary or moves at constant speed, have been drawn with solid lines in Figures 10A, 10B and 14B, 15B. The positions of the pattern segment and the non-slip element during acceleration or braking, i.e. when a change in speed ΔR or respectively a change in tyre direction ΔY prevails, are indicated with dotted lines in Figures 10A, 10B and 14B, 15B. It is to be understood that ΔR has effect primarily in the rolling direction R, in which case Figures 10A, 10B and 14B, 15B relate to non-slip elements in a position P1 transverse to the rolling direction and that the change in direction ΔY means a lateral grip situation of the tyre, in which slipping Y or a tendency to slip has effect in a direction transverse to the rolling direction, in which case Figures 10A, 10B and 14B, 15A concern non-slip elements in positions P2 parallel to the rolling direction.

In the resting state, i.e. after mounting and when the tyre is either not rotating or is rotating at constant speed, the length H1 of the non-slip elements is, according to one embodiment of the invention, substantially perpendicular to the tyre tread 20, as is indicated in Figures 10A-10B. Likewise in this resting state, even if the weight of the car is not bearing on the tread, the end face 6 of the non-slip element 1 is approximately in the same plane as the tread 20. In any case, in this situation the projection of the end face of the non-slip element from the outer surface 20 of the tyre is substantially below 1 mm, and most commonly substantially below 0.5 mm and, as was already noted above, typically in the same plane as the tread 20. When the car is either accelerated or braked, whereupon a longitudinal force or skidding ΔR is produced, or if, respectively, the car is driven along a curve, whereupon a transverse force or skidding ΔY is produced, both the pattern segments 11 and the non-slip elements 1 according to the invention tilt in the manner shown by dotted lines in Figures 10A and 10B. Thereupon, as far as is known, one or both of the following phenomena will occur. At that end of the stem portion of the non-slip element which includes the end face 6 there is produced an effective projection increase Q, which, when pushing into the road surface, causes an increase in the tyre grip. Another effect is that the end face 6 of the non-slip element 1 tilted to an angle of α1 or respectively α2 impinges against the road surface and thereby causes deceleration even if there is no projection increase Q. According to the present-day conception, both of these phenomena do occur, although the effect of the projection increase Q is most likely greater. With this mechanism, during constant driving the vehicle tyres behave as tyres without non-slip elements, but whenever the speed or the direction is changed, the non-slip elements are activated, having at least the same effect as have prior known studs in a tyre. Thus the studs according to the present invention are active only when, and exactly when, they are needed.

In the resting state, i.e. after mounting and when the tyre is either not rotating or rotates at constant speed, the length H1 of the non-slip elements forms according to another embodiment of the invention an angle χ to the normal N to the tread 20, as shown in Figures 14B and 15B. Likewise, in this resting state, even if the weight of the car is not bearing on the tread, the end face 6 of the non-slip element 1 is in approximately the same plane as the tread 20. In any case, in this situation the projection of the end face of the non-slip element from the outer surface 20 of the tyre is substantially below 1 mm, and most commonly substantially below 0.5 mm, and as was already noted above, typically in the same plane as the tread 20. When the car is either accelerated or braked, whereupon a longitudinal force or skidding ΔR is produced, or if, respectively, the car is driven along a curve, whereupon a transverse force or skidding ΔY is produced, both the pattern segment 11 and the non-slip element 1 according to the invention, at the leading edge of the pattern segment, tilt in the manner shown by dotted lines in Figures 14B and 15B. The non-slip element 1 at the trailing edge of the pattern segment, for its part, remains approximately in its resting position. Thereupon, as far as is known, one or both of the following phenomena will occur. At that end of the stem portion of the non-slip element 1 which includes the end face 6 there is produced an effective projection increase Q, which, when pushing into the road surface, causes an increase in the tyre grip. Another effect is that the end face 6 of the non-slip element 1 tilted to an angle of α1 or respectively α2 impinges against the road surface and thereby causes deceleration even if there is no projection increase Q. According to the present-day conception, both of these phenomena do occur, although the effect of the projection increase Q is most likely greater, especially in this second embodiment. The projection increase is according to the invention increased by the placement of the non-slip elements at a slant in the said manner and in opposite edge areas of the pattern segment, in which case, during acceleration or deceleration, or change in direction, the non-slip element in the leading edge of the pattern segment will rise more erect, as can be understood. This effect is further enhanced by the fact that there is between these non-slip elements 1 placed at opposite edges a slit 27 or slits 27 in the rubber of the pattern segment 11, which slits render the pattern segment more flexible and increase the grip of the pattern segment. The deformation of the slits 27 is also indicated in the figures with dotted lines. At present, the projection increase Q is estimated to be of the order of 0.5 mm, 1 mm, or even 1.5 mm. With this mechanism, during constant driving the vehicle tyres behave as tyres without non-slip elements, but whenever the speed or the direction is changed, the non-slip elements become activated, having at least the same effect as have prior known studs in a tyre. Thus the studs according to the present invention are active only when, and exactly when, they are needed.

## Claims

1. A passive non-slip element (1) to be mounted in recesses (12) preformed in vehicle tyre (10) tread pattern segments (11), of which there are a plurality in the tread, both in succession in the rolling direction and in the direction transverse thereto, the non-slip element being composed of a strong and hard material and its shape comprising a stern portion (2) towards the tyre tread (20) and a flange-like basal portion (3) towards the tyre body (21) and the non-slip element being always within one pattern segment, **characterized** in that the non-slip element (1) is substantially lamelliform in shape, the total thickness (D1) of the stem portion (2) of the non-slip element in the orientation of the tyre tread (20) being at maximum approximately one-third of the width (L) of the stem portion (2) in the orientation of the tread, that the basal portion (3) is wider than the stem portion and/or separated from the stem portion by a neck portion (5), that the greatest thickness (K2, K3, K6) of the basal portion in the orientation of the tread is at maximum five times the said total thickness (D1) of the stem portion, and that the basal portion (3) is substantially straight in the orientation of the said width (L) in order to provide tiltability of the non-slip element.

2. A non-slip element according to Claim 1, **characterized** in that the said total thickness (D1) of the stem portion of the non-slip element is preferably within the range of 1/4-1/20 of the said width of the stem portion and typically of the order of 1/5-1/15 of the width (L) of the stem portion, and that the said width (L) of the non-slip element is substantially smaller than the width (A1), in the direction perpendicular to the rolling direction (R), of the pattern segments (11) serving as location sites in the tyre, or respectively smaller than the width (A2, A3), in that direction in which the width (L) of the non-slip element in the main settles, of the pattern segments serving as location sites.

3. A non-slip element according to Claim 1, **characterized** in that the flange (4b, 4c, 4d, 4f) of the basal portion (3) of the non-slip element projects from the stem portion:
- possibly in the orientations of both the width (L) and the total thickness (D1) of the non-slip element; or preferably
- either only in the orientation of the width (L) of the non-slip element; or
- only in the orientation of the total thickness (D1) of the non-slip element.

4. A non-slip element according to Claim 3, **characterized** in that:
- in a non-slip element equipped with a flange, the largest thickness (K2, K3, K6) of this basal portion (3) in the orientation of the tread is at maximum four times and preferably at maximum three times the said total thickness (D1) of the stem portion; and
- in a non-slip element equipped with a neck portion (5), the extent (K5...K7) of the flange is:
- equal to the width (L) of the stem portion or at maximum one and a half times the width of the stem portion; and/or
- equal to or smaller than the total thickness (D1) of the stem portion, and that the length (H1) of the non-slip element is at maximum equal to the height (H2) of the tyre tread pattern segment from the base of the tyre grooves (22).

5. A non-slip element according to Claim 1, **characterized** in that the width (L) of the stem portion (2) of the non-slip element is within the range of 3 mm - 20 mm and its total thickness (D1) within the range of 0.5 mm - 3 mm, and the length (H1) of the non-slip element is within the range of 5 mm - 15 mm, and that the mass of the non-slip element is:
- for passenger car tyres at maximum approximately 1 g, typically at maximum 0.8 g, and preferably at maximum 0.7 or 0.5 g;
- for van tyres at maximum approximately 2 g, typically at maximum 1.6 g and preferably at maximum 1.4 or 1 g; and
- for truck tyres at maximum approximately 3 g, typically at maximum 2.5 g, and preferably at maximum 2.1 or 1.5 g.

6. A non-slip element according to Claim 1, **characterized** in that in the direction of its width (L) the stem portion of the non-slip element is in shape either straight (S1) or corrugated or jagged (S2), or divided in the orientation of the length (H1) of the non-slip element into shorter sections (S3) by means of notches (7) extending from the end face (6) of the non-slip element to inside it, and that the deviation of the basal portion from symmetry in the orientation perpendicular to the width (L) is at maximum 20%, typically at maximum 10%, and preferably as small as possible.

7. A non-slip element according to Claim 1, **characterized** in that the non-slip element (1) is composed of:
- substantially one strong and hard material, which is either a metal alloy or a ceramic material or a composite material; or alternatively
- a laminate the layers of which are in the main transverse to the thickness (D) of the non-slip element.

8. A non-slip element according to Claim 7, **characterized** in that
{a} the principal component of the said metal alloy is a metal of the iron group and that the metal alloy contains alloying agents and reinforcing phases;
{b} the said ceramic material contains a sintered, substantially homogeneous oxide, nitride, carbide, boride, silicide, a mixture or complex compounds thereof, and possibly a silicate or silicates;
{c} in the said composite material the matrix is made up of a metal or a polymer and the reinforcing phase of another metal or a metal alloy, oxide, nitride, carbide, boride, silicide, a mixture or complex compounds thereof, polymers, boron or carbon;
{d} the said laminate contains as surface layers a hard material and in the central parts a softer material which provides strength.

9. A vehicle tyre equipped with non-slip elements, the tyre comprising:
{a} preformed recesses (12) in the tyre (10) tread pattern segments (11), of which there are a plurality in the tread, both in succession in the rolling direction and in the direction transverse thereto;
{b} mounted in the said recesses, non-slip elements (1)
- which are composed of a strong and hard material and the shape of which comprises a stem portion (2) towards the tread (20) of the tyre and a flange-like basal portion (3) towards the body (21) of the tyre, and
- the stem portion end face (6) of which is approximately at the level of the tyre tread, and
- which are always within one pattern segment,
**characterized** in that
{c} the shape of the non-slip element (1) is substantially lamelliform, the total thickness (D1) of the stem portion (2) of the non-slip element being in the orientation of the tyre tread (20) at maximum approximately one-third of the stem portion width (L) in the orientation of the tread, that the basal portion (3) is wider than the stem portion and/or separated by a neck portion (5) from the stem portion, and that
{d} at least a substantial proportion of the non-slip elements (1) in the tyre (10) are in a position (P1) in which their width (L) is transverse to the rolling direction (R) of the tyre, in which case the grip of the non-slip element on the road is based on a tilting (α1, α2) of the pattern segment and the non-slip element, caused by a change in speed (ΔR) and/or a change of direction (ΔY) of the tyre.

10. A vehicle tyre according to Claim 9, equipped with non-slip elements, **characterized** in that, in order to improve the lateral grip of the tyre, a certain proportion of the non-slip elements (1) in the tyre (10) are in a position (P2) wherein their width (L) is longitudinal relative to the rolling direction (R) of the tyre, the grip of the non-slip element on the road being based on a tilting (α1, α2) of the pattern segment and the non-slip element, caused by a change of speed (ΔR) and/or a change of direction (ΔY) of the tyre, and that there are such non-slip elements located longitudinally relative to the rolling direction of the tyre at least in the area (26) close to the tyre shoulder (25).

11. A vehicle tyre according to Claim 9 or 10, equipped with non-slip elements, **characterized** in that the width (L) of the non-slip elements located in positions (P1) transverse to the rolling direction forms, relative to the rolling direction (R), an angle (β1) which is within the range of 45°-90°, typically within the range of 70°-90°, and that the width (L) of the non-slip elements located in positions (P2) longitudinal relative to the rolling forms, relative to the rolling direction (R), an angle (β2) which is within the range of 45°-0°, typically within the range of 20°-0°.

12. A vehicle tyre according to Claim 9, equipped with non-slip elements, **characterized** in that the tyre has non-slip elements (1) in a plurality of rows (T1...T12) in the rolling direction, the rows being located, relative to the rolling direction, on the tyTe circumference in parallel or partly interlaced, and in each row (T1-T8, T12) the widths (L) of the non-slip elements are mutually at substantially the same angle to the rolling direction (R), and that the numbers of non-slip elements in the tyre and the positions of their widths relative to the tyre rolling direction are arranged to yield a grip distributed evenly over the circumference length.

13. A vehicle tyre according to Claim 9, equipped with non-slip elements, **characterized** in that
- in the pattern segments the length (H1) of the non-slip elements in the resting state is substantially perpendicular to the tread (20); or alternatively,
- in the resting state the length (H1) of the non-slip elements in the edge areas of the pattern segments is at a slant to the tread (20) so that the stem portion (2) of the non-slip elements is farther away from the central parts of the tread surface area (A1-A3) of the pattern segment (11) than is the basal portion (3).

14. A vehicle tyre according to Claim 13, equipped with non-slip elements, **characterized** in that the length (H1) of the non-slip elements at the edges of the pattern segment forms, relative to the normal to the tread (20) and in a plane which is perpendicular to the width (L) of the non-slip element, an angle (χ) which is within the range of 3°-45°, preferably smaller than 30°, typically greater than 5° or 10°, and that in a pattern segment there are two of these non-slip elements in a slanted position, at its opposite edges.

15. A vehicle tyre according to Claim 13, equipped with non-slip elements, **characterized** in that in the pattern segments (11) equipped with the said non-slip elements (1) in a slanted position additionally have narrow slits (27) within the portion between the two non-slip elements at the opposite edges, and the main length (M) of these slits is approximately parallel to the width (L) of the non-slip elements, and that the pattern segment has, between the non-slip element and the vertical edge parallel to the width of the non-slip element, an edge bevelling (28) between the vertical edge (31) and the tread (20).
